(19) **Europäisches Patentamt**

**European Patent Office**

**Office européen des brevets**

(11) **EP 1 278 112 B1**

(12) **EUROPEAN PATENT SPECIFICATION**

(45) Date of publication and mention
of the grant of the patent:
**28.05.2003 Bulletin 2003/22**

(51) Int Cl.[7]: **G06F 1/00**

(21) Application number: **01401870.9**

(22) Date of filing: **12.07.2001**

(54) **A process for providing access of a client to a content provider server under control of a resource locator server**

Verfahren zum Bereitstellen von Kundenzugriff auf einen inhaltanbietenden Server unter Kontrolle eines resoursenlokalisierenden Servers

Procédé permettant au client d'accéder au serveur fournisseur de contenus sous contrôle d'un serveur localisateur de ressources

(84) Designated Contracting States:
**AT BE CH CY DE DK ES FI FR GB GR IE IT LI LU MC NL PT SE TR**
Designated Extension States:
**AL LT LV MK RO SI**

(43) Date of publication of application:
**22.01.2003 Bulletin 2003/04**

(73) Proprietor: **Castify Networks SA**
**06400 Valbonne - Sophia Antipolis (FR)**

(72) Inventors:
 • **Legout, Arnaud, Résidence Les Alizés**
 **06600 Antibes (FR)**
 • **Humme, Jakob**
 **06160 Juan Les Pins (FR)**

(74) Representative: **Cabinet Hirsch**
 **34, Rue de Bassano**
 **75008 Paris (FR)**

(56) References cited:
**WO-A-00/73876**          **US-A- 5 708 780**
**US-A- 6 032 260**

• **BELLARE M ET AL: "KEYING HASH FUNCTIONS FOR MESSAGE AUTHENTICATION" ADVANCES IN CRYPTOLOGY - CRYPTO '96. 16TH. ANNUAL INTERNATIONAL CRYPTOLOGY CONFERENCE. SANTA BARBARA, AUG. 18 - 22, 1996. PROCEEDINGS, PROCEEDINGS OF THE ANNUAL INTERNATIONAL CRYPTOLOGY CONFERENCE (CRYPTO), BERLIN, SPRINGER, DE, vol. CONF. 16, 18 August 1996 (1996-08-18), pages 1-15, XP000626584 ISBN: 3-540-61512-1**
• **GUTMANN P: "Software Generation of Practically Strong Random Numbers" PROCEEDINGS OF THE 7TH USENIX SECURITY SYMPOSIUM SAN ANTONIO, TX, JAN.26-29, 1998, 29 January 1998 (1998-01-29), XP002172158**

**Description**

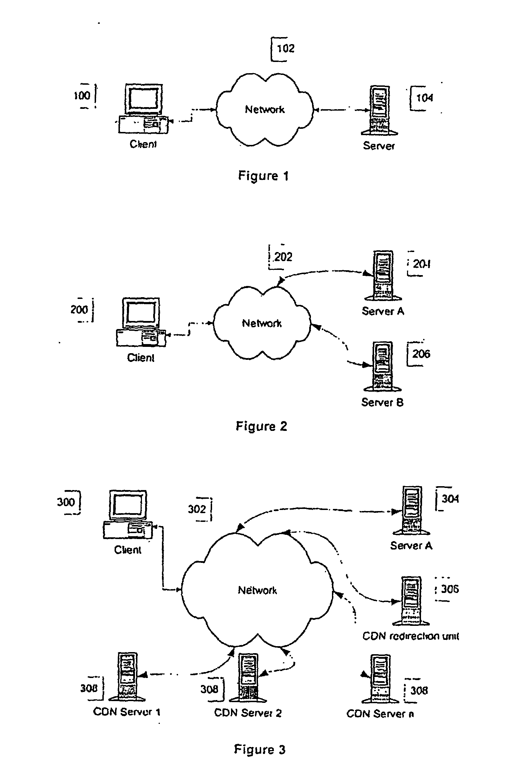

The invention is related to the field of communications over networks, and specifically to authenticating and authorizing access of a user or client to a content provider server over a network such as the World Wide Web.
The World Wide Web (Web) uses the stateless hypertext transfer protocol (HTTP) to allow a client to request content from a server over a network. The HTTP protocol enables the transparent navigation from Web servers to Web servers through hypertext links. An hypertext link makes an association between a part of text and a URL (Uniform Resource Locator). A Web browser that runs on the machine of the client sends a HTTP GET message to a Web server running on the machine of the server. The address of the server is determined by a Uniform Resource Locator (URL) from the form "<protocol>://<server-address>/<path>/<content>". The protocol HTTP is a client-server protocol, which uses a TCP network connection. How the data is interpreted by the browser depends on the MIME type of the returned data. Figure 1 depicts the basic settings required by the client-server protocol: A client (100) and a server (104) are connected via a network (102); this network can also be multiple interconnected networks, for example the Internet. In figure 1, on the client machine (100) could run a Web browser, on the server machine a Web server.

In this simple scenario, as depicted in Figure 1, where all content is delivered by the same server, a client can be authenticated, for example, via a simple login and password scheme over a secured connection (as example SSL or https). Once a client is authenticated, the server decides whether the client is authorized to access its content. However, there are instances where the content requested by a client is on a server separate from the server authenticating the client. Such a configuration is depicted in Figure 2, where two separate servers 204 and 206 are depicted, in addition to the client computer system 200. The client may access either of the two servers over the network. A problem arises when the client accesses content provided by one of the servers - say server B - under the control of another server - say server A. In this case, the authentication scheme discussed above cannot be applied.

US-A-5 870 546 is directed to the problem of determining the efficiency of advertising displayed to a client over a network; efficiency is measured as the number of times a client pursues the URL displayed in a server. A Web server system displaying the advertisement provides a client system with a URL reference to the advertised server. The URL reference is encoded with predetermined redirection and accounting data. On receipt by the advertised server, the URL reference is decoded and the accounting data is stored. This makes it possible for the advertised server to identify the number of URL displayed in the Web server system displaying the advertisement which are effectively pursued by the client. This document does not contemplate any use other than determining the efficiency of advertising, and notably does not prevent links from being copied by the client for accessing the advertised server without having first accessed the Web server system displaying the advertisement. Such copy of the link is called "link hijacking" in the rest of this description.

US-A-5 963 915 discusses a method for performing trans-Internet purchase transactions. This document discusses the problem of "third party assumption of identity attack". The problem is that a third party may be able to continue a secure session started by another client browser, if client authentication occurs only at the initiation of a secure session. This document only discusses security of purchase transactions.

US-A-5 708 780 describes a method of performing access control in which the client accesses the content server and is redirected to an authentication server if the URL to be accessed does not have the requested session identifier. The authentication server is thereby hidden from the client. Changing the content offered by the content provider requires the set of information files, to which the current SID authorises access, to be updated.

A number of cryptographic algorithms are disclosed in the prior art. One may notably mention:

- Bellare, Mihir; Canetti, Ran; Kawczyk, Hugo: Keying Hash Functions for Message Authentication; in Advances in Cryptology - Crypto 96 Proceedings, Lecture Notes in Computer Science Vol. 1109, N. Koblitz ed., Springer-Verlag, 1996;
- Rivest R., The MD5 Message-Digest Algorithm, RFC-1321, MIT LCS and RSA Data Security, Inc., April 1992;
- Touch, J.: Performance Analysis of MD5, in Proceedings Sigcomm '95, Boston, pp. 77-86;
- SECURE HASH STANDARD, National Institute of Standards and Technology, FIPS PUB 180-1, April 17, 1995; and
- P. Gutmann, Software Generation of Random Numbers for Cryptographic Purposes, in Proceedings of the 1998 Usenix Security Symposium, USENIX Association, 1998, pp. 243-257.

Thus, there is a need for a process for providing access of a client to a content provider server under control of a resource locator server, which does not allow link hijacking, or at least makes such link hijacking very difficult to carry out by the client.

In one embodiment, the process for providing access of a client to a content provider server under control of a resource locator server comprises:

- the client connecting to a network through a computer system and accessing the resource locator server;
- the resource locator server providing to the computer system a resource locator for accessing the content provider server, said resource locator containing a digital signature representative of a right granted by the resource locator server to the client for accessing the content provider server, said digital signature being computed based on at least one unique characteristic of the computer system or of the connection of the computer system to the network;

- the client computer system accessing the content provider server using said resource locator;
- the content provider server checking the digital signature contained in the resource locator for the connection of the client to the network, and allowing the client to access content according to the result of this checking step.

The digital signature may be computed as a function of one or more of the following parameters : an address of the computer system of the client in the network, a unique identifier of the computer system of the client, the content to be accessed by the client, a client identification, time.

One may also provide a secret key to the resource locator server and to the content provider server, and compute the digital signature as a function of the secret key. This secret key may be generated using a cryptographic number generator.

In this case, the step of checking the digital signature by the content provider preferably comprises computing another digital signature using the secret key and comparing the other digital signature with the digital signature contained in the resource locator.

For the computation, it is advantageous to use a cryptographic hash function, and particularly a cryptographic hash function selected among MD5, SHA-1, MD2, MD4, RIPEMD-128 and RIPEMD-160. One may also use a cryptographic hash function of a string comprising at least one of the address of the computer system of the client in the network, a unique identifier of the computer system of the client, a function of the content to be accessed by the client, a client identification, and time. If a secret key is provided to the resource locator server and to the content provider server, the string may comprise the secret key.

In one embodiment of the invention, the content provider server is a content delivery network comprising at least two servers. One may then provide a secret key to the resource locator server and to one of the servers, and provide another secret key to the resource locator server and to another one of said at least two servers. It is advantageous that the secret key for one of the two servers be computed using a cryptographic hash function of a main secret key and of an address of said one server in the network.

The invention further provides a process for providing a resource locator to a client, in a resource locator server connected to a network, comprising:

- receiving from the network an access request originating from a computer system connecting the client to the network;
- providing to the network toward the computer system a resource locator, said resource locator containing a digital signature representative of a right granted by the resource locator server to the client for accessing resource located by said resource locator, said digital signature being computed based on at least one unique characteristic of the computer system or of the connection of the computer system to the network.

The computation may be carried out as stated above

The invention further provides a process for providing access of a client to a content, in a content provider server connected to a network, comprising:

- receiving from the network an access request originating from a computer system connecting the client to the network and containing a digital signature;
- checking the digital signature contained in the resource locator according to at least one unique characteristic of the computer system or of the connection of the computer system to the network received in said request, and
- allowing the client to access content according to the result of this checking step.

The step of checking the digital signature may comprise computing another digital signature and comparing said another digital signature with the digital signature contained in said resource locator.

If the access request contains an address of the computer system of the client in the network, the other digital signature may be computed as a function of the address. The access request may also contain a unique identifier of the computer system of the client and the other digital signature is then computed as a function of the unique identifier. One could also compute the other digital signature as a function of the content to be accessed by the client, as a function of a client identification, as a function of time, or as a function of a secret key provided to the server.

For computing the other digital signature, one may proceed as discussed above.

The invention further provides a resource locator server, comprising

- a connection to a network,
- a program carrying out the process given above.

It also provides a content provider server, comprising

- a connection to a network;
- a program carrying out the process given above.

In this case, the content provider server may be a content delivery network comprising at least two servers, and possible a redirection unit. In case a redirection unit is provided, it would have a program selecting one of the servers of said content delivery network and carrying out this process.

The invention also provides a computer program product embodied in a computer-readable medium for providing a resource locator to a client, in a resource locator server connected to a network, the computer program product comprising:

- computer readable program code means for receiving from the network an access request originating from a computer system connecting the client to the network;
- computer readable program code means for providing to the network toward the computer system a resource locator,

said resource locator containing digital signature representative of a right granted by the resource locator server to the client for accessing resource located by said resource locator, said digital signature being computed based on at least one unique characteristic of the computer system or of the connection of the computer system to the network.

Last, the invention also provides a computer program product embodied in a computer-readable medium for providing access of a client to a content, in a content provider server connected to a network, the computer program product comprising:

- computer readable program code means for receiving from the network an access request originating from a computer system connecting the client to the network and containing a digital signature;
- computer readable program code means for checking the digital signature contained in the resource locator according to at least one unique characteristic of the computer system or of the connection of the computer system to the network received in said request, and
- computer readable program code means for allowing the client to access content according to the result of this checking step.

Other features of the invention appear from the consideration of the following description, in reference to the drawing, where :

- Figure 1 shows a client-server system that is connected via a network;
- Figure 2 shows a similar system with two servers;
- Figure 3 shows a system where one of the servers of figure 2 is replaced by a content delivery network with a redirection unit;
- Figure 4 shows a flowchart of a process according to the invention, as executed by a server from which the user or client gets a resource locator;
- Figure 5 shows a flowchart of a process according to the invention, as executed by a server that serves the requested content to a client when requested with the resource locator.

Figure 2 shows a client server system connected via a network with two servers. One of the servers - server B in the rest of this example - is a content provider server. The other server - server A in this example - is a resource locator server providing to the client a resource locator for accessing server B.

For instance, let A be a content aggregator (for example a Web portal) that has a contractual relation with B, a content provider. A offers, via its Web site, links to content items that are served by a server (for example a Web server, an ftp server, or a streaming media server) operated by B. Since A and B have a contractual relation, they want to prevent that any non authorized third-party C can also offer links to the content provided by B. In the Internet today, C could copy the links from A's Web pages and use them in its own Web pages, this being a form of "link hijacking". The links could also be copied by a client for later access to the content provided by B, or for forwarding to another client. This is another form of link hijacking.

The invention solves this link hijacking problem by introducing a digital signature in the resource locator provided by the resource locator server A to the client, for accessing the content provider server B. The digital signature is representative of a right granted by the resource locator server A to the client for accessing the content provider server B; it is computed based on at least one unique characteristic of the computer system or of the connection of the computer system to the network.

Thereafter, the client computer system accesses the content provider server using the resource locator; the content provider server B may then check the digital signature contained in the resource locator used by the client, and may allow the client to access content according to the result of this checking step.

This prevents any form of link hijacking. Assume the resource locator is copied by the client, and is provided to a third party. The digital signature is computed based on at least one unique characteristic of the computer system or of the connection of the computer system to the network. Thus, the content provider server B may identify, upon receiving the rcsource locator from the third party, that the resource locator was transmitted by a party that does have the required unique characteristic. The content provider server may therefore refuse to serve the request of the third party.

Thus, together with known Web server security settings - SSL, https or any other scheme for recognizing the client - A can thus offer subscription based content access to B's content or pay-per-view models, without requiring that B also uses end-to-end security. This is especially useful, if the contents served by B are large files or are streamed over connectionless protocols (for example audio/video content streamed by media servers such as Microsoft's Windows Media Server or Real-Network's RealServer). Furthermore, in the preferred embodiment discussed below, the invention requires only the exchange of private keys between A and B, once the service is initialized. Afterwards, no direct communication between the servers A and B are needed.

In the preferred embodiment, the invention uses a scheme based on a cryptographic hash function and on the use of a secret key. The strength of the scheme relies on the fact that, given a secret key $K$ and a cryptographic hash function $H$, it is in practice not possible with computational methods to find an $m'$ such that $H(K+m+K)=H(m')$ without the knowledge of $K$, and it is in practice not possible to find with computational methods $K$ based on the knowledge of m and of $H(K+m+K)$; this is discussed in Bellare et al. Should a mathematical method be known in the future that breaks the prior scheme, it is always possible within this invention to change the parameters within the cryptographic hash function to strengthen its resistance against attacks; an example would be the use of HMAC as described in Bellare et al. It is also possible to a use another newer hash function with stronger properties; new and secure cryptographic hash functions are regularly published.

A preferred embodiment of the invention is now described.

1. Initialization:

First a secret key $K_{Web}$ is generated. The key is preferably generated with a cryptographically strong key generator. That means that it is not possible from an arbitrary sequence of keys to find the next key in the sequence. Implementations of cryptographically strong key generators are commercially available and a description of their implementation can be found in literature, for example in the reference of P. Gutman given above. $K_{Web}$ is distributed to $A$ and $B$.

2. Authentication process

Let H be a cryptographic hash function, for example MD5 (see Rivest reference), SHA-1 (see Secure Hash Standard), or any other. In the preferred embodiment, we choose MD5 as hash function, since it is for the moment the best compromise between security and speed of computation (see Touch reference). Moreover, MD5 is publicly available. The output of the MD5 hash function is a 128 bits string whatever the input is.

$K_{Web}$ is a secret key shared by $A$ 's Web server (204) and by $B's$ server (206).

A viewer first connects to $A's$ Web server. By a given process that is independent of the described invention, the web server may identify this viewer as authorized to connect to the web server. Examples to implement this given process use SSL, https, or other security settings known per se.

All Web pages that contain links (URLs) to the content served by $B's$ server are deployed as dynamic Web pages, that means that the Web pages are calculated in the moment the viewer accesses them. At least, the resource locator is dynamically computed, so that the digital signature is computed based on the unique characteristic of the client computer system or of the client connection; the rest of the pages may be static. In the moment the viewer accesses such a Web page, the method of this invention starts its authentication process.

Before the Web page is delivered to the viewer, the authentication method which is integrated with $A's$ Web server (for example using ASP, JSP, or other techniques to generate dynamic Web pages) replaces each link to B's content, with a new link that contains the original link plus optionally additional data (for example a unique user identifier and a timestamp) plus a digital signature. The signature is calculated by a cryptographic hash function, which takes as input this link and the additional data and a unique identifier of the client system or of its connection to the network and the secret key $K_{Web}$. In this description, the IP address of the connection of the client system to the network is used as unique identifier. The viewer's IP address is known from the TCP connection with the Web server and is accessible from the implementation of the authentication method. For simplicity, the rest of this section describes the method without any additional data; the usefulness of additional data is then explained later in describing alternative use cases.

For example, let the authentication be implemented as a Java Bean ("urlAuthenticator"), used by a Java Server Page (JSP) to generate a new authenticated link.

The viewer sends an HTTP GET request to $A's$ Web server to see a Web page that contains the links to $B's$ content (400). The following JSP portion is then executed by the Web server to generate a new link for each link that should be authenticated:

```
<a    href="<%=    urlAuthenticator.generateLink
( request.getRemoteHost(),
    "http://www.b.com/1.asx") %>">Click here</a>
```

which produces for example the following HTML code:

```
<a href="
http://www.b.com/1.asx?
8978a19bc1c3a98d6467c603e1be299c">Click
    here</a>
```

where the part behind the "?" is the digital signature for this content and the IP address of the requesting viewer.

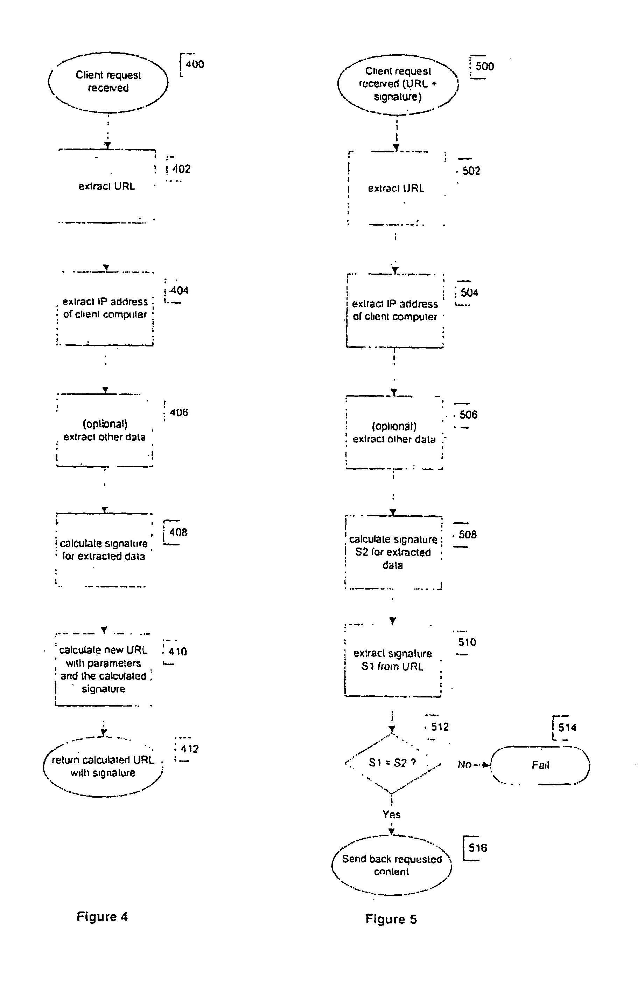

The computational steps of the method implemented within $A's$ Web server are depicted in the flowchart in figure 4. Each link is computed as soon as the page is requested (400). The method first extracts the URL to B's content (402), given in the JSP example above as parameter to the method's implementation (generateLink()). The IP address of the viewer's computer is extracted (404) and also passed to the method ( request.getRemoteHost()). In this example no additional data is passed to the method, which would be step (406).

The method then computes the digital signature (408) as follows:

$$S_1 = H(K_{Web} + IP_V + contentid + K_{Web})$$

where $H()$ is the cryptographic hash function operating on a string, $K_{Web}$ is the secret key shared by $A's$ Web server and by $B's$ server, $IP_V$ is the IP address of the viewer, $contentid$ is the requested content ("1" in this example), and "+ " denotes the concatenation of strings. $S_1$ must be encoded to be a valid string inside a URL; in this example the value of $S_1$ is encoded as hexadecimal representation in a string, which guarantees that only characters of "0-9" and "a-e" are used, and that the total length is exactly 32 characters long in the case that MD5 is used as hash function.

In the last step the original URL and the signature are concatenated to form a new valid URL to the requested content (410). This URL is then the output of the executed method (412) and is inserted into the Web page sent back to the viewer's browser.

At this point it is fundamental to understand that the security of this embodiment of the invention relies on the fact that the secret key $K_{Web}$ must never be given to a non-trusted third party.

When the viewer selects this generated link, the viewer's application (for example, the Web browser or a plugin for the specified media-type if the URL denotes another protocol than the HTTP protocol) connects to $B's$ server and requests the URL together with the signature (500).

B's server passes the received URL (which would be http://www.b.com/1.asx? 8978a19bc1c3a98d6467c603e1be299c to continue the previous example) together with the IP address $IP_{V'}$ *(504) from the connection with* the viewer to $B's$ implementation of the authentication method. The authentication method extracts from the URL the $contentid'$ (502) and $S_1$ (510).

Finally, the authentication method computes $S_2 = H(K_{Web} + IP_{V'} + contentid' + K_{Web})$ (508) and checks whether $S_2$ is equal to $S_1$ (512).

If $S_2$ is equal to $S_1$, the requested content is served by $B's$ server (516), otherwise the operation is executed that is considered as the right response for an unauthorized user (514), for example a "Not authorized" HTTP error is returned.

If $S_2$ is equal to $S_1$, it is guaranteed that the viewer of the A's Web page has the same IP address as the viewer that accesses $B's$ server, that means $IP_{V'} = IP_V$; the viewers are thus considered as being the same. Additionally, it is guaranteed that this viewer was authorized by $A's$ Web server to view the requested content, since the $contentid$ and $contentid'$ are the same. Since only $A's$ and $B's$ server share the secret key $K_{Web}$, it is guaranteed that the viewer must have obtained the URL by prior accessing $A's$ Web page and cannot have obtained this link from an unauthorized source.

The process has the following advantages. Two providers, $A$ and $B$, can ensure that content that $B$ serves is only available to clients authorized by $A$. Only an initial secret key must be exchanged between $A$ and $B$; it is not needed to know all users that will be authorized by $A$ in advance; i.e. $A$ can admit later on more and other users to access $B$'s content.

The described method does not need a real-time communication between the server that authenticates the user the first time ($A$) and the server that serves the content for the authorized user ($B$).

Furthermore, the connection between the user and the server that serves the content does not need to be secured. This is especially important for streaming content, which is served via UDP packets.

The described method does not need that the original server communicates in real-time with one or several content servers. This leads to a higher performance of the described method for the authentication process. The described method is easier to implement and does not depend on network conditions between the original server and the content servers.

The method has advantages especially if several content servers can serve the same content, since the secret key can be installed on each replica server; for example if the content was replicated to ensure higher availability or faster downloads.

This method works for all forms of link hijacking : it works if a third party copies links from A, but also if an authorized user of $A$ willfully discloses the links to $B's$ content.

The method also scales with the number of content servers. It may be used in a variety of related products. Examples are:

- content distribution networks that support subscription models or pay-per-view models.
- allowing a content provider to publish content on the network and to allow partners to offer access to this content to their customers, but not to others.

The invention is not limited to the preferred embodiment exemplified above. For instance, the process was discussed above for dynamic Web pages. It also applies to static web pages, provided the digital signature is computed according to one unique characteristic of the client computer system or connection. The example uses a cryptographic hash function. Other means may be used for computing the digital signature - basically any function that is hard enough to reverse for the client, but may be easily computed by both the resource locator server and the content provider server. Functions other than cryptographic functions may not make it necessary to provide a secret key to the resource locator server and to the content provider server.

The example uses as a unique characteristic the IP address; as discussed below, one may use another unique characteristic; generally speaking, the characteristic should be unique to avoid link hijacking, and is preferably difficult to alter by the client.

In another embodiment of the invention, additional data can be passed from *A's* Web server to *B's* server and it can be guaranteed that the viewer cannot alter this additional data. As example the following can be useful in a pay-per-view system for streaming audio/video transmissions:

*A* offers access to streaming transmission served by *B's* server, but wants additionally to ensure that the viewer cannot use the link obtained from *A's* Web page multiple times. *A* has also an agreement with *B*, that *B* provides *A* with the data how long a particular viewer has accessed a stream. To do this, *A* deploys a secured Web server, where each viewer authenticates himself first via a login and password scheme. After the viewer is authenticated and authorized to access the Web page, a unique user identification *userid* is assigned to this viewer. Additionally, the time is obtained, when the viewer selects a link to a stream.

The URL that is computed by the described method is composed of the original URL plus the *time* plus the *userid* and followed by the signature as described above, but also computed above the additional data. The URL has thus a form similar to:

href="http://www.b.com/l.asx?userid_time_S",

where $S = H(K_{Web} + IP_V + userid + contentid + time + K_{Web})$.

*B's* server extracts from the URL the *time* and *userid* and refuses access to the stream, if the difference between the time in the URL and the actual time is greater than a given threshold (for example 10 minutes). This requires that the clocks between *A's* and *B's* servers are loosely synchronized (less than a 10 minutes difference) and that the time in the URL is encoded in an agreed timezone format, which is known by both servers (for example: Universal Time, UTC). *B* uses the obtained *userid* to report to *A*, how long the viewer has accessed the stream. The authentication method guarantees that the viewer cannot alter neither the *time* nor the *userid* to access the content from *B*.

In a similar scenario, *B* operates a content delivery network (CDN), cfg. figure 3. In a CDN, the content is replicated on multiple servers. The described method works as described above, only the secret key $K_{Web}$ is given to all servers within the CDN.

If the CDN uses application level redirections, the described method can be chained. The secret key $K_{Web}$ is shared between *A's* Web server (304) and the redirection unit (306) of the CDN. The redirection unit of the CDN uses a different key $K_{CDN}$ to compute a new URL that is given back to the viewer. This secret key $K_{CDN}$ is shared between the redirection unit and all the content servers (308) of the CDN. If the viewer should be restricted to access the stream only from the server chosen by the redirection unit, a unique identifier (for example the IP address of the chosen content server) can be encoded within the computed URL and signature. Before a content server within the CDN delivers the content to the viewer, the server tests, if it has been selected by the redirection unit by comparing the unique identifier in the URL with its locally known unique identifier.

In the example of the cryptographic function, the security of the process depends on the fact that an unauthorized person does not know the secret key. Therefore it is preferable to store the secret key on each server in a way that no unauthorized person has access to it. In a huge distributed system consisting on hundreds or thousands of servers (for example a huge CDN), a different secret key can be assigned to each server, although this complicates the initialization phase, and the redirection unit must know, which server will serve the requested content for a particular request. However, the computation of a cryptographically strong secret key requires many CPU cycles, and the secret keys must be stored in a table by the redirection unit. In order to facilitate this process the following method can be taken:

The redirection unit first has a main secret key $K_{RU}$ generated with a cryptographically strong key generator.

Then, for each CDN server $CS^i$ (IP address: $IP_{CS^i}$), a secret key $K_{CS}^i = H(K_{RU} + IP_{CS}^i + K_{RU})$ is generated and on each CDN server $CS^i$ the secret key $K_{CS}^i$ is stored. Each time the redirection unit selects the CDN server $CS^i$, the redirection unit computes the signature $S_2$ with the computed key $K_{CS}^i$ instead of $K_{CDN}$.

In case a key $K_{CS}^i$ is stolen, the thief can access to any content on the CDN server $CS^i$, but does not have access to the other CDN servers. Moreover, with the stolen key, it is not computationally possible to discover the main key $K_{RU}$.

The described invention uses in its preferred embodiment the IP address of the requester, since it is technically very difficult to masquerade its own IP address and being able to receive IP packets from a source in the Internet. However, in some cases the IP address is not the best authentication method. Firewalls, Web proxies and caches can intercept a request and formulate a new request originating at the interceptor. Alternatively, a different unique identifier can be taken by the described invention to replace the IP address in the method description; candidates for these unique identifiers are among others: the global unique identifier (GUID) supplied by some browsers and media players or the CPU serial number of the requester's machine.

The main problem with those unique identifiers is that they are in theory easier to masquerade than the IP address. The other proposed unique identifiers can also be taken in addition to the IP address. It is possible to use more than one unique identifier.

The description of the alternative embodiment within a CDN describes, how a central redirection unit can produce a new URL with a new digital signature. Within this invention, it is also possible that the redirection unit generates a document (HTML, XML, ASX, SMILE, or other format) with links that are calculated as described for the resource locator server. In general, the described invention can be chained.

The description of the alternative embodiment within a CDN describes, how a central redirection unit can produce a new URL with a new digital signature. Within this invention, it is also possible that no central redirection unit for a CDN exist, but that the redirection is made transparently on the network path (e.g. through a Router or Layer 4 - 7 switch). As example, in such a scenario a Layer 4 switch would redirect all HTTP requests to an HTTP cache for all end-users that are on this network path. The pages with the links generated by the resource location server are marked as non-cacheable; when the viewer requests the content from the content server, the cache uses the same method as the content server to check the digital signature and grants the access to the content in behalf of the content server. This implies, of course, that the cache implements the described invention. However, the redirection unit (in this example: Layer 4 switch) does not use the described method.

The description given above shows the process as a whole. Of course, the process is carried out independently at the resource locator server and at the content provider server - whatever his form. It is possible to provide a computer program coding the process carried out at the resource locator server, and a separate computer program coding the process carried out at the content provider server.

**Claims**

1. A process for providing access of a client to a content provider server under control of a resource locator server, comprising:

   - the resource locator server displaying to clients resource locators to content of the content provider server;
   - the client connecting to a network through a computer system and accessing the resource locator server;
   - the resource locator server providing to the computer system a resource locator for accessing the content provider server, said resource locator containing a digital signature representative of a right granted by the resource locator server to the client for accessing the content provider server, said digital signature being computed based on at least one unique characteristic of the computer system or of the connection of the computer system to the network and based on an identifier of the content to be accessed;
   - the client computer system accessing the content provider server using said resource locator;
   - the content provider server checking the digital signature contained in the resource locator for the connection of the client to the network, and allowing the client to access content according to the result of this checking step.

2. The process of claim 1, wherein the step of providing comprises, for the resource locator server, computing the digital signature as a function of an address of the computer system of the client in the network.

3. The process of claim 1, wherein the step of providing comprises, for the resource locator server, computing the digital signature as a function of a unique identifier of the computer system of the client.

4. The process of claim 1, 2 or 3, wherein the step of providing comprises, for the resource locator server, computing the digital signature as a function of a client identification.

5. The process of one of claims 1 to 4, wherein the step of providing comprises, for the resource locator server, computing the digital signature as a function of time.

6. The process of one of claims 1 to 5, further comprising the step of providing a secret key to the resource locator server and to the content provider server, and wherein the step of providing comprises, for the resource locator server, computing the digital signature as a function of the secret key.

7. The process of claim 6, wherein the step of providing a secret key comprises generating the secret key using a cryptographically number generator.

8. The process of claim 6 or 7, wherein the step of checking the digital signature by the content provider comprises computing another digital signature using the secret key and comparing said another digital signature with the digital signature contained in said resource locator.

9. The process of one of claims 1 to 8, wherein the step of computing comprises computing a cryptographic hash function.

10. The process of one of claims 2 to 9, wherein the step of computing comprises computing a cryptographic hash function of a string comprising at least one of the address of the computer system of the client in the network, a unique identifier of the computer system of the client, a function of the content to be accessed by the client, a client identification, and time.

11. The process of claim 10, further comprising the step of providing a secret key to the resource locator server and to the content provider server, and wherein said string comprises the secret key.

12. The process of claim 11, wherein said cryptographic hash function is a keyed cryptographic hash function.

13. The process of one of claims 9 to 12, wherein the cryptographic hash function is selected among MD5, SHA-1, MD2, MD4, RIPEMD-128 and RIPEMD-160.

14. The process of one of claims 1 to 13, wherein the content provider server is a content delivery network comprising at least two servers.

15. The process of claim 14, further comprising the step of providing a secret key to the resource locator server and to one of said at least two servers, and providing another secret key to the resource locator server and to another one of said at least two servers.

16. The process of claim 15, wherein a secret key for one of said at least two servers is computed using a cryptographic hash function of a main secret key and of an address of said one server in the network

17. A process for providing a resource locator to a client, in a resource locator server connected to a network, comprising:

  - displaying resource locators to clients
  - receiving from the network an access request for one of the displayed resource locators, originating from a computer system connecting the client to the network;
  - providing to the network toward the computer system a resource locator, said resource locator containing a digital signature representative of a right granted by the resource locator server to the client for accessing a resource located by said resource locator, said digital signature being computed based on at least one unique characteristic of the computer system or of the connection of the computer system to the network and based on an identifier of the content to be accessed.

18. The process of claim 17, wherein the step of providing comprises computing the digital signature as a function of an address of the computer system of the client in the network.

19. The process of claim 17, wherein the step of providing comprises computing the digital signature as a function of a unique identifier of the computer system of the client.

20. The process of claim 17, 18 or 19, wherein the step of providing comprises computing the digital signature as a function of a client identification.

21. The process of one of claims 17 to 20, wherein the step of providing comprises computing the digital signature as a function of time.

22. The process of one of claims 17 to 20, wherein the step of providing comprises computing the digital signature as a function of a secret key.

23. The process of one of claims 17 to 20, wherein-the step of computing comprises computing a cryptographic hash function.

24. The process of one of claims 17 to 23, wherein the step of computing comprises computing a cryptographic hash function of a string comprising at least one of the address of the computer system of the client in the network, a unique identifier of the computer system of the client, a function of the resource, a client identification, and time.

25. The process of claims 24, wherein the string further comprises a secret key.

26. The process of claim 25, further comprising the step of generating said secret key using a cryptographic number generator.

27. The process of claims 25 or 26, wherein said cryptographic hash function is a keyed cryptographic hash function.

28. The process of one of claims 23 to 27, wherein the cryptographic hash function is selected among MD5, SHA-1, MD2, MD4, RIPEMD-128 and RIPEMD-160.

29. The process of one of claims 22 to 28, wherein said secret key is a function of a server address contained in said resource locator.

**30.** The process of claim 29, wherein said secret key is a cryptographic hash function of a server address contained in said resource locator.

**31.** A process for providing access of a client to a content, in a content provider server connected to a network, comprising:

- receiving from the network an access request originating from a computer system connecting the client to the network and containing a digital signature;
- checking the digital signature contained in a resource locator according to at least one unique characteristic of the computer system or of the connection of the computer system to the network received in said request, and according to an identifier of the content requested by the client; and
- allowing the client to access content according to the result of this checking step.

**32.** The process of claim 31, wherein the step of checking the digital signature comprises computing another digital signature and comparing said another digital signature with the digital signature contained in said resource locator.

**33.** The process of claim 32, wherein said access request contains an address of the computer system of the client in the network and wherein said another digital signature is computed as a function of the address.

**34.** The process of claim 32, wherein said access request contains a unique identifier of the computer system of the client and wherein said another digital signature is computed as a function of the unique identifier.

**35.** The process of one of claims 32 to 34, wherein said access request contains a client identification and wherein said another digital signature is computed as a function of said client identification.

**36.** The process of one of claims 32 to 35, wherein said another digital signature is computed as a function of time.

**37.** The process of one of claims 32 to 36, wherein the server is provided with a secret key, and wherein said another digital signature is computed as a function of said secret key.

**38.** The process of one of claims 32 to 37, wherein the step of computing another digital signature comprises computing a cryptographic hash function.

**39.** The process of one of claims 32 to 38, wherein the step of computing said another key comprises computing a cryptographic hash function of a string comprising at least one of the address of the computer system of the client contained in said request, a unique identifier of the computer system of the client contained in said request, a function of the content to be accessed by the client, a client identification contained in said request, and time.

**40.** The process of claim 3 8 or 39, wherein the cryptographic hash function is selected among MD5, SHA-1, MD2, MD4, RIPEMD-128 and RIPEMD-160.

**41.** A resource locator server, comprising

- a connection to a network,
- a program carrying out the process of one of claims 17 to 30.

**42.** A content provider server, comprising

- a connection to a network;
- a program carrying out the process of one of claims 31 to 40.

**43.** The server of claim 42, wherein the content provider server is a content delivery network comprising at least two servers.

**44.** The server of claim 43, wherein the content delivery network comprises a redirection unit, said redirection unit having a program carrying out the process of one of claim 17 to 30.

**45.** The server of claim 43, wherein the content delivery network comprises a redirection unit, said redirection unit having a program selecting one of the servers of said content delivery network and carrying out the process of one of claim 17 to 30.

**46.** A computer program product embodied in a computer-readable medium for providing a resource locator to a client, in a resource locator server connected to a network, the computer program product comprising:

- computer readable program code means for displaying resource locators to clients;
- computer readable program code means for receiving from the network an access request for one of the displayed resource locators originating from a computer system connecting the client to the network;
- computer readable program code means for providing to the network toward the computer system a resource locator,

said resource locator containing a digital signature representative of a right granted by the resource locator server to the client for accessing a resource located by said resource locator, said digital signature being computed based on at least one unique characteristic of the computer system or of the connection of the computer system to the network and based on an identifier of the resource.

47. A computer program product embodied in a computer-readable medium for providing access of a client to a content, in a content provider server connected to a network, the computer program product comprising:

- computer readable program code means for receiving from the network an access request originating from a computer system connecting the client to the network and containing a digital signature;
- computer readable program code means for checking the digital signature contained in a resource locator according to at least one unique characteristic of the computer system or of the connection of the computer system to the network received in said request, and according to an identifier of the content requested by the client: and
- computer readable program code means for allowing the client to access content according to the result of this checking step.

**Patentansprüche**

1. Verfahren zum Bereitstellen eines Client-Zugriffs auf einen Content-Provider-Server unter Kontrolle eines Ressourcen-Lokalisierungs-Servers, aufweisend:

den Ressourcen-Lokalisierungs-Server, der Clients Ressourcen-Lokalisierer auf den Inhalt des Content-Provider-Servers anzeigt;
den Client, der sich mit einem Netzwerk mittels eines Computersystems verbindet, und der auf den Ressourcen-Lokalisierungs-Server zugreift;
den Ressourcen-Lokalisierungs-server, der dem Computersystem einen Ressourcen-Lokalisierer zum Zugreifen auf den Content-Provider-Server bereitstellt,
wobei der Ressourcen-Lokalisierer eine digitale Signatur enthält, die repräsentativ für ein Recht ist, das dem Client von dem Ressourcen-Lokalisierungs-Server zum Zugreifen auf den Content-Provider-Server gewährt wird, wobei die digitale Signatur basierend auf zumindest einer eindeutigen Kenngröße des Computersystems oder der Verbindung des Computersystems zu dem Netzwerk und basierend auf einem Kennzeichner des Inhalts, auf den zugegriffen werden soll, berechnet wird;
das Client-Computersystem, das auf den Content-Provider-Server unter Verwenden des Ressourcen-Lokalisierers zugreift;
den Content-Provider-Server, der die digitale Signatur, die in dem Ressourcen-Lokalisierer für die Verbindung des Clients zu dem Netzwerk enthalten ist, prüft und dem Client den Zugriff auf den Inhalt gemäß dem Ergebnis dieses Prüfschrittes ermöglicht.

2. Verfahren gemäß Anspruch 1, wobei der Schritt des Bereitstellens für den Ressourcen-Lokalisierungs-Server das Berechnen der digitalen Signatur als eine Funktion von einer Adresse des Client-Computersystems in dem Netzwerk aufweist.

3. Verfahren gemäß Anspruch 1, wobei der Schritt des Bereitstellens für den Ressourcen-Lokalisierungs-Server das Berechnen der digitalen Signatur als eine Funktion von einem eindeutigen Kennzeichner des Client-Computersystems aufweist.

4. Verfahren gemäß Anspruch 1, 2 oder 3, wobei der Schritt des Bereitstellens für den Ressourcen-Lokalisierungs-Server das Berechnen der digitalen Signatur als eine Funktion von einer Client-Identifikation aufweist.

5. Verfahren gemäß einem der Ansprüche 1 bis 4, wobei der Schritt des Bereitstellens für den Ressourcen-Lokalisierungs-Server das Berechnen der digitalen Signatur als eine Funktion von der Zeit aufweist.

6. Verfahren gemäß einem der Ansprüche 1 bis 5, ferner aufweisend den Schritt des Bereitstellens eines geheimen Schlüssels dem Ressourcen-Lokalisierungs-Server und dem Content-Provider-Server, und
wobei der Schritt des Bereitstellens für den Ressourcen-Lokalisierungs-Server das Berechnen der digitalen Signatur als eine Funktion von dem geheimen Schlüssel aufweist.

7. Verfahren gemäß Anspruch 6, wobei der Schritt des Bereitstellens eines geheimen Schlüssels das Erzeugen des geheimen Schlüssels unter Verwenden eines Generators für kryptographische Zahlen aufweist.

8. Verfahren gemäß Anspruch 6 oder 7, wobei der Schritt des Prüfens der digitalen Signatur durch den Content-Provider das Berechnen einer anderen digitalen Signatur unter Verwenden des geheimen Schlüssels sowie das Vergleichen der anderen digitalen Signatur mit der digitalen Signatur aufweist, die in dem Ressourcen-Lokalisierer enthalten ist.

9. Verfahren gemäß einem der Ansprüche 1 bis 8, wobei der Schritt des Berechnens das Berechnen einer kryptographischen Hash-Funktion aufweist.

10. Verfahren gemäß einem der Ansprüche 2 bis 9, wobei der Schritt des Berechnens das Berechnen einer kryptographischen Hash-Funktion von einer Zeichenkette aufweist, die zumindest die Adresse des Client-Computersystems in dem Netzwerk, einen eindeutigen Kennzeichner des Client-Computersystems, eine Funktion des Inhalts, auf den von dem Client zugegriffen werden soll, eine Client-Identifikation und/oder einen Zeitwert aufweist.

11. Verfahren gemäß Anspruch 10, ferner aufweisend den Schritt des Bereitstellens eines geheimen Schlüssels dem Ressourcen-Lokalisierungs-Server und dem Content-Provider-Server, und wobei die Zeichenkette den geheimen Schlüssel aufweist.

12. Verfahren gemäß Anspruch 11, wobei die kryptographische Hash-Funktion eine schlüsselbasierte kryptographische Hash-Funktion ist.

13. Verfahren gemäß einem der Ansprüche 9 bis 12, wobei die kryptographische Hash-Funktion aus MDS, SHA-1, MD2, MD4, RIPEMD-128 und RIPEMD-160 ausgewählt ist.

14. Verfahren gemäß einem der Ansprüche 1 bis 13, wobei der Content-Provider-Server ein Content-Delivery-Netzwerk ist, das zumindest zwei Server aufweist.

15. Verfahren gemäß Anspruch 14, ferner aufweisend den Schritt des Bereitstellens eines geheimen Schlüssels dem Ressourcen-Lokalisierungs-Server und einem der zumindest zwei server sowie des Bereitstellens eines anderen geheimen Schlüssels dem Ressourcen-Lokalisierungs-server und dem anderen der zumindest zwei Server.

16. Verfahren gemäß Anspruch 15, wobei ein geheimer Schlüssel für einen der zumindest zwei Server unter Verwenden einer kryptographischen Hash-Funktion von einem geheimen Hauptschlüssel und einer Adresse des einen Servers in dem Netzwerk berechnet wird.

17. Verfahren zum Bereitstellen eines Ressourcen-Lokalisierers auf einem Ressourcen-Lokalisierungs-server, der mit einem Netzwerk gekoppelt ist, einem Client, aufweisend:

Anzeigen den Clients Ressourcen-Lokalisierer;
Empfangen einer Zugriffs-Anforderung von dem Netzwerk für einen der angezeigten Ressourcen-Lokalisierer, die von einem Computersystem erzeugt worden ist, das den Client mit dem Netzwerk koppelt;
Bereitstellen eines Ressourcen-Lokalisierers dem Netzwerk in Richtung des Computersystems, wobei der Ressourcen-Lokalisierer eine digitale Signatur aufweist, die repräsentativ für ein Recht ist, das dem Client von dem Ressourcen-Lokalisierungs-Server zum Zugreifen auf eine Ressource gewährt wird, die mittels des Ressourcen-Lokalisierers lokalisiert wird, wobei die digitale Signatur basierend auf zumindest einer eindeutigen Kenngröße des Computersystems oder der Verbindung des Computersystems zu dem Netzwerk und basierend auf einem Kennzeichner des Inhalts, auf den zugegriffen werden soll, berechnet wird.

18. Verfahren gemäß Anspruch 17, wobei der Schritt des Bereitstellens das Berechnen der digitalen Signatur als eine Funktion von einer Adresse des Client-Computersystems in dem Netzwerk aufweist.

19. Verfahren gemäß Anspruch 17, wobei der Schritt des Bereitstellens das Berechnen der digitalen Signatur als eine Funktion von einem eindeutigen Kennzeichner des Client-Computersystems aufweist.

20. Verfahren gemäß Anspruch 17, 18 oder 19, wobei der Schritt des Bereitstellens das Berechnen der digitalen Signatur als eine Funktion von einer Client-Identifikation aufweist.

21. Verfahren gemäß einem der Ansprüche 17 bis 20, wobei der Schritt des Bereitstellens das Berechnen der digitalen Signatur als eine Funktion von der Zeit aufweist.

22. Verfahren gemäß einem der Ansprüche 17 bis 20, wobei der Schritt des Bereitstellens das Berechnen der digitalen Signatur als eine Funktion von einem geheimen Schlüssel aufweist.

23. Verfahren gemäß einem der Ansprüche 17 bis 20, wobei der Schritt des Berechnens das Berechnen einer kryptographischen Hash-Funktion aufweist.

24. Verfahren gemäß einem der Ansprüche 17 bis 23, wobei der Schritt des Berechnens das Berechnen einer kryptographischen Hash-Funktion von einer Zeichenkette aufweist, die zumindest die Adresse des Client-Computersystems in dem Netzwerk, einen eindeutigen Kennzeichner des Client-Computersystems, eine Funktion der Ressource, eine Client-Identifikation und/oder einen Zeitwert aufweist.

25. Verfahren gemäß Anspruch 24, wobei die Zeichenkette ferner einen geheimen Schlüssel aufweist.

26. Verfahren gemäß Anspruch 25, ferner aufweisend einen Schritt des Erzeugens des geheimen Schlüssels unter Verwenden eines Generators kryptographischer Zahlen.

27. Verfahren gemäß Anspruch 25 oder 26, wobei die kryptographische Hash-Funktion eine schlüsselbasierte kryptographische Hash-Funktion ist.

28. Verfahren gemäß einem der Ansprüche 23 bis 27, wobei die kryptographische Hash-Funktion aus MD5, SHA-1, MD2, MD4, RIPEMD-128 und RIPEMD-160 ausgewählt ist.

29. Verfahren gemäß einem der Ansprüche 22 bis 28, wobei der geheime Schlüssel eine Funktion von einer Server-Adresse ist, die in dem Ressourcen-Lokalisierer enthalten ist.

30. Verfahren gemäß Anspruch 29, wobei der geheime Schlüssel eine kryptographische Hash-Funktion von einer Server-Adresse ist, die in dem Ressourcen-Lokalisierer enthalten ist.

31. Verfahren zum Bereitstellen eines Client-Zugriffs auf einen Inhalt auf einem Content-Provider-Server, der mit einem Netzwerk gekoppelt ist, aufweisend:

  Empfangen einer Zugriffs-Anforderung von dem Netzwerk, die von einem Computersystem erzeugt worden ist, das den Client mit dem Netzwerk koppelt, und die eine digitale Signatur enthält;
  Prüfen der digitalen Signatur, die in einem Ressourcen-Lokalisierer enthalten ist, gemäß zumindest einer eindeutigen Kenngröße des Computersystems oder der Verbindung des Computersystems zu dem Netzwerk, welche Kenngröße in der Anforderung empfangen worden ist, und gemäß einem Kennzeichner des Inhalts, der von dem Client angefordert wird; und
  Ermöglichen dem Client, auf den Inhalt gemäß dem Ergebnis dieses Prüfschrittes zuzugreifen.

32. Verfahren gemäß Anspruch 31, wobei der Schritt des Prüfens der digitalen Signatur das Berechnen einer anderen digitalen Signatur und das Vergleichen der anderen digitalen Signatur mit der digitalen Signatur aufweist, die in dem Ressourcen-Lokalisierer enthalten ist.

33. Verfahren gemäß Anspruch 32, wobei die Zugriffs-Anforderung eine Adresse des Client-Computersystems in dem Netzwerk aufweist, und wobei die andere digitale Signatur als eine Funktion von der Adresse berechnet wird.

34. Verfahren gemäß Anspruch 32, wobei die Zugriffs-Anforderung einen eindeutigen Kennzeichner des Client-Computersystems aufweist, und wobei die andere digitale Signatur als eine Funktion von dem eindeutigen Kennzeichner berechnet wird.

35. Verfahren gemäß einem der Ansprüche 32 bis 34, wobei die Zugriffs-Anforderung eine Client-Identifikation aufweist, und wobei die andere digitale Signatur als eine Funktion von der Client-Identifikation berechnet wird.

36. Verfahren gemäß einem der Ansprüche 32 bis 35, wobei die andere digitale Signatur als eine Funktion von der Zeit berechnet wird.

37. Verfahren gemäß einem der Ansprüche 32 bis 36, wobei der Server mit einem geheimen Schlüssel versehen ist, und wobei die andere digitale Signatur als eine Funktion von dem geheimen Schlüssel berechnet wird.

38. Verfahren gemäß einem der Ansprüche 32 bis 37, wobei der Schritt des Berechnens der anderen digitalen Signatur das Berechnen einer kryptographischen Hash-Funktion aufweist.

39. Verfahren gemäß einem der Ansprüche 32 bis 38, wobei der Schritt des Berechnens des anderen Schlüssels das Berechnen einer kryptographischen Hash-Funktion von einer Zeichenkette aufweist, die zumindest die Adresse des Client-Computersystems, die in der Anforderung enthalten ist, einen eindeutigen Kennzeichner des Client-Computersystems, der in der Anforderung enthalten ist, eine Funktion des Inhalts, auf den mittels des Clients zugegriffen werden soll, eine Client-Identifikation, die in der Anforderung enthalten ist, und/oder einen Zeitwert aufweist.

40. Verfahren gemäß Anspruch 38 oder 39, wobei die kryptographische Hash-Funktion aus MD5, SHA-1, MD2, MD4, RIPEMD-128 und RIPEMD-160 ausgewählt ist.

41. Ressourcen-Lokalisierungs-Server, aufweisend:

  eine Verbindung zu einem Netzwerk,
  ein Programm, das das Verfahren gemäß einem der Ansprüche 17 bis 30 durchführt.

**42.** Content-Provider-Server, aufweisend:

eine Verbindung zu einem Netzwerk;
ein Programm, das das Verfahren gemäß einem der Ansprüche 31 bis 40 durchführt.

**43.** Server gemäß Anspruch 42, wobei der Content-Provider-Server ein Content-Delivery-Netzwerk ist, das zumindest zwei Server aufweist.

**44.** Server gemäß Anspruch 43, wobei das Content-Delivery-Netzwerk eine Umleit-Einheit aufweist, wobei die Umleit-Einheit ein Programm aufweist, das das Verfahren gemäß einem der Ansprüche 17 bis 30 durchführt.

**45.** Server gemäß Anspruch 43, wobei das Content-Delivery-Netzwerk eine Umleit-Einheit aufweist, wobei die Umleit-Einheit ein Programm aufweist, das einen der Server des Content-Delivery-Netzwerkes auswählt und das Verfahren gemäß einem der Ansprüche 17 bis 30 durchführt.

**46.** Computerprogrammprodukt, das in einem computerlesbaren Medium ausgebildet ist, zum Bereitstellen eines Ressourcen-Lokalisierers auf einem Ressourcen-Lokalisierungs-Server einem Client, der mit einem Netzwerk gekoppelt ist, wobei das Computerprogrammprodukt aufweist:

ein computerlesbares Programmcode-Mittel zum Anzeigen den Clients Ressourcen-Lokalisierer;
ein computerlesbares Programmcode-Mittel zum Empfangen einer Zugriffs-Anforderung für einen der angezeigten Ressourcen-Lokalisierer von dem Netzwerk, welche Anforderung von einem Computersystem erzeugt worden ist, das den Client mit dem Netzwerk koppelt;
ein computerlesbares Programmcode-Mittel zum Bereitstellen eines Ressourcen-Lokalisierers dem Netzwerk in Richtung des Computersystems,

wobei der Ressourcen-Lokalisierer eine digitale Signatur aufweist, die repräsentativ für ein Recht ist, das dem Client von dem Ressourcen-Lokalisierungs-server zum Zugreifen auf eine Ressource gewährt wird, die mittels des Ressourcen-Lokalisierers lokalisiert wird, wobei die digitale Signatur basierend auf zumindest einer eindeutigen Kenngröße des Computersystems oder der Verbindung des Computersystems zu dem Netzwerk und basierend auf einem Kennzeichner der Ressource berechnet wird.

**47.** Computerprogrammprodukt, das in einem computerlesbaren Medium ausgebildet ist, zum Bereitstellen eines Zugriffs auf einen Inhalt auf einem Content-Provider-Server, der mit einem Netzwerk gekoppelt ist, einem Client, wobei das Computerprogrammprodukt aufweist:

ein computerlesbares Programmcode-Mittel zum Empfangen einer Zugriffe-Anforderung von dem Netzwerk, die von einem Computersystem erzeugt worden ist, das den Client mit dem Netzwerk koppelt, und die eine digitale Signatur enthält;
ein computerlesbares Programmcode-Mittel zum Prüfen der digitalen Signatur, die in einem Ressourcen-Lokalisierer enthalten ist, gemäß zumindest einer eindeutigen Kenngröße des Computersystems oder der Verbindung des Computersystems zu dem Netzwerk, welche Kenngröße in der Anforderung empfangen worden ist, und gemäß einem Kennzeichner des Inhalts, der von dem Client angefordert wird; und
ein computerlesbares Programmcode-Mittel zum Ermöglichen dem Client, auf den Inhalt gemäß dem Ergebnis dieses Prüfschrittes zuzugreifen.

## Revendications

**1.** Un procédé pour permettre l'accès d'un client à un serveur fournisseur de contenu sous le contrôle d'un serveur locateur (qui localise) de ressource, comprenant :

- le serveur locateur de ressource annonçant à des locateurs de ressource de clients le contenu du serveur fournisseur de contenu ;
- le client se connectant à un réseau à travers un système d'ordinateur et accédant au serveur locateur de ressource ;
- le serveur locateur de ressource fournissant au système d'ordinateur un locateur de ressource pour accéder au serveur fournisseur de contenu,

ledit locateur de ressource contenant une signature numérique représentative d'un droit accordé par le serveur locateur de ressource au client pour accéder au serveur fournisseur de contenu, ladite signature numérique étant calculée sur la base d'au moins une caractéristique unique du système d'ordinateur ou de la liaison du système d'ordinateur au réseau et étant basée sur un moyen d'identification du contenu auquel on doit accéder ;

- le système d'ordinateur client accédant au serveur fournisseur de contenu en utilisant ledit locateur de ressource ;
- le serveur fournisseur de contenu vérifiant la signature numérique contenue dans le locateur de ressource pour la liaison du client au réseau et permettant au client d'accéder au contenu en correspondance au résultat de cette étape de vérification.

2. Le procédé selon la revendication 1, dans lequel l'étape consistant à fournir comprend, pour le serveur locateur de ressource, le calcul de la signature numérique comme une fonction d'une adresse du système d'ordinateur du client dans le réseau.

3. Le procédé selon la revendication 1, dans lequel l'étape consistant à fournir comprend, pour le serveur locateur de ressource, le calcul de la signature numérique comme une fonction d'un moyen d'identification unique du système d'ordinateur du client.

4. Le procédé selon la revendication 1, 2 ou 3, dans lequel l'étape consistant à fournir comprend, pour le serveur locateur de ressource, le calcul de la signature numérique comme une fonction d'un moyen d'identification de client.

5. Le procédé selon l'une des revendications 1 à 4, dans lequel l'étape consistant à fournir comprend, pour le serveur locateur de ressource, le calcul de la signature numérique comme une fonction du temps.

6. Le procédé selon l'une des revendications 1 à 5, comprenant en outre l'étape consistant à fournir un code secret au serveur locateur de ressource et au serveur fournisseur de contenu, et dans lequel l'étape consistant à fournir comprend, pour le serveur locateur de ressource, le calcul de la signature numérique comme une fonction du code secret.

7. Le procédé selon la revendication 6, dans lequel l'étape consistant à fournir un code secret comprend la génération du code secret en utilisant un générateur de nombres cryptographiques.

8. Le procédé selon la revendication 6 ou 7, dans lequel l'étape de vérification de la signature numérique par le fournisseur de contenu comprend le calcul d'une autre signature numérique en utilisant le code secret et la comparaison de ladite autre signature numérique avec la signature numérique contenue dans ledit locateur de ressource.

9. Le procédé selon l'une des revendications 1 à 8, dans lequel l'étape de calcul comprend le calcul d'une fonction cryptographique de hachage.

10. Le procédé selon l'une des revendications 2 à 9, dans lequel l'étape de calcul comprend le calcul d'une fonction cryptographique de hachage d'une chaîne comprenant au moins l'une parmi les adresses du système d'ordinateur du client dans le réseau, un moyen d'identification unique du système d'ordinateur du client, une fonction du contenu auquel le client doit accéder, une identification du client et l'heure.

11. Le procédé selon la revendication 10, comprenant en outre l'étape consistant à fournir un code secret au serveur locateur de ressource et au serveur fournisseur de contenu, et dans lequel ladite chaîne comprend le code secret.

12. Le procédé selon la revendication 11, dans lequel ladite fonction cryptographique de hachage est une fonction cryptographique codée.

13. Le procédé selon l'une des revendications 9 à 12, dans lequel la fonction cryptographique de hachage est choisie parmi MD5, SHA-1, MD2, MD4, RIPEMD-128 et RIPEMD-160.

14. Le procédé selon l'une des revendications 1 à 13, dans lequel le serveur fournisseur de contenu est un réseau de fourniture de contenu comprenant au moins deux serveurs.

15. Le procédé selon la revendication 14, comprenant en outre l'étape de fourniture d'un code secret au serveur locateur de ressource et à l'un desdits au moins deux serveurs, et la fourniture d'un autre code secret au serveur locateur de ressource et à un autre desdits au moins deux serveurs.

16. Le procédé selon la revendication 15, dans lequel un code secret pour l'un desdits au moins deux serveurs est calculé en utilisant une fonction cryptographique de hachage d'un code principal secret et une adresse dudit un serveur dans le réseau.

17. Un procédé pour fournir un locateur de ressource à un client dans un serveur locateur de ressource relié à un réseau, comprenant :

- l'affichage de locateurs de ressource aux clients ;
- la réception à partir d'un réseau d'une demande d'accès pour l'un des locateurs de ressource affichés, en partant d'un système d'ordinateur reliant le client au réseau ;
- la fourniture au réseau vers le système d'ordinateur d'un locateur de ressource, ledit locateur de ressource contenant une signature numérique représentative d'un droit accordé par le serveur locateur de ressource au client pour accéder à une ressource localisée par ledit locateur de ressource, ladite signature numérique étant calculée sur la base d'au moins une caractéristique unique du système d'ordinateur ou de la liaison du système d'ordinateur au réseau et étant basée sur un moyen d'identification du contenu auquel on doit accéder.

18. Le procédé selon la revendication 17, dans lequel l'étape de fourniture comprend le calcul de la signature numérique comme une fonction d'une adresse du système d'ordinateur du client dans le réseau.

19. Le procédé selon la revendication 17, dans lequel l'étape de fourniture comprend le calcul de la signature numérique comme une fonction d'un moyen d'identification unique du système d'ordinateur du client.

20. Le procédé selon la revendication 17, 18 ou 19, dans lequel l'étape de fourniture comprend le calcul de la signature numérique comme une fonction d'un moyen d'identification du client.

21. Le procédé selon l'une des revendications 17 à 20, dans lequel l'étape de fourniture comprend le calcul de la signature numérique comme une fonction du temps.

22. Le procédé selon l'une des revendications 17 à 20, dans lequel l'étape de fourniture comprend le calcul de la signature numérique comme une fonction d'un code secret.

23. Le procédé selon l'une des revendications 17 à 20, dans lequel l'étape de calcul comprend le calcul d'une fonction cryptographique de hachage.

24. Le procédé selon l'une des revendications 17 à 23, dans lequel l'étape de calcul comprend le calcul d'une fonction cryptographique de hachage d'une chaîne comprenant au moins l'une des adresses du système d'ordinateur du client dans le réseau, à un moyen d'identification unique du système d'ordinateur du client, une fonction de la ressource, un moyen d'identification du client et l'heure.

25. Le procédé selon la revendication 24, dans lequel la chaîne comprend en outre un code secret.

26. Le procédé selon la revendication 25, comprenant en outre l'étape de génération dudit code secret en utilisant un générateur de nombres cryptographiques.

27. Le procédé selon les revendications 25 ou 26, dans lequel ladite fonction cryptographique de hachage est une fonction cryptographique de hachage codée.

28. Le procédé selon l'une des revendications 23 à 27, dans lequel la fonction cryptographique de hachage est choisie parmi MD5, SHA-1, MD2, MD4, RIPEMD-128 et RIPEMD-160.

29. Le procédé selon l'une des revendications 22 à 28, dans lequel ledit code secret est une fonction d'une adresse de serveur contenue dans ledit locateur de ressource.

30. Le procédé selon la revendication 29, dans lequel ledit code secret est une fonction cryptographique de hachage d'une adresse de serveur contenue dans ledit locateur de ressource.

31. Un procédé pour assurer l'accès d'un client à un contenu, dans un serveur fournisseur de contenu relié à un réseau, comprenant les étapes consistant :

  - à recevoir du réseau une demande d'accès partant d'un système d'ordinateur reliant le client au réseau et contenant une signature numérique,
  - à vérifier la signature numérique contenue dans un locateur de ressource selon au moins une caractéristique unique du système d'ordinateur ou de la liaison du système d'ordinateur au réseau, reçue dans ladite demande, et en correspondance à un moyen d'identification du contenu demandé par le client ; et
  - à permettre au client d'accéder au contenu en correspondance au résultat de cette étape de vérification.

32. Le procédé selon la revendication 31, dans lequel l'étape de vérification de la signature numérique comprend le calcul d'une autre signature numérique et la comparaison de ladite autre signature numérique avec la signature numérique contenue dans ledit locateur de ressource.

33. Le procédé selon la revendication 32, dans lequel ladite demande d'accès contient une adresse du système d'ordinateur du client dans le réseau, et dans lequel ladite autre signature numérique est calculée comme une fonction de l'adresse.

34. Le procédé selon la revendication 32, dans lequel ladite demande d'accès contient un moyen d'identification unique du système d'ordinateur du client, et dans lequel ladite autre signature numérique est calculée comme une fonction du moyen d'identification unique.

35. Le procédé selon l'une des revendications 32 à 34, dans lequel ladite demande d'accès contient un moyen d'identification du client et dans lequel ladite autre signature numérique est calculée comme une fonction de ladite identification du client.

36. Le procédé selon l'une des revendications 32 à 35, dans lequel ladite autre signature numérique est calculée comme une fonction du temps.

37. Le procédé selon l'une des revendications 32 à 36, dans lequel le serveur est muni d'un code secret, et dans lequel ladite autre signature numérique est calculée comme une fonction dudit code secret.

38. Le procédé selon l'une des revendications 32 à 37, dans lequel l'étape de calcul d'une autre signature numérique comprend le calcul d'une fonction cryptographique de hachage.

39. Le procédé selon l'une des revendications 32 à 38, dans lequel l'étape de calcul dudit autre code comprend le calcul d'une fonction cryptographique de hachage d'une chaîne comprenant au moins l'une des adresses du système d'ordinateur du client contenue dans ladite demande, un moyen d'identification unique du système d'ordinateur du client contenu dans ladite demande, une fonction du contenu auquel le client doit accéder, une identification du client contenue dans ladite demande, et l'heure.

40. Le procédé selon la revendication 38 ou 39, dans lequel la fonction cryptographique de hachage est choisie parmi MD5, SHA-1, MD2, MD4, RIPEMD-128 et RIPEMD-160.

41. Un serveur locateur de ressource, comprenant :

   - une liaison à un réseau,
   - un programme mettant en oeuvre le procédé selon l'une des revendications 17 à 30.

42. Un serveur fournisseur de contenu comprenant :

   - une liaison à un réseau,
   - un programme mettant en oeuvre le procédé selon l'une des revendications 31 à 40.

43. Le serveur selon la revendication 42, dans lequel le serveur fournisseur de contenu est un réseau fournisseur de contenu comprenant au moins deux serveurs.

44. Le serveur selon la revendication 43, dans lequel le réseau de fourniture de contenu comprend une unité de redirection, ladite unité de redirection comprenant un programme mettant en oeuvre le procédé selon l'une des revendications 17 à 30.

45. Le serveur selon la revendication 43, dans lequel le réseau de fourniture de contenu comprend une unité de redirection, ladite unité de redirection ayant un programme sélectionnant l'un des serveurs dudit réseau de fourniture de contenu et mettant en oeuvre le procédé selon l'une des revendications 17 à 30.

46. Un produit de programme d'ordinateur mis en oeuvre dans un support lisible par un ordinateur pour fournir un locateur de ressource à un client, dans un serveur locateur de ressource relié à un réseau, le produit de programme d'ordinateur comprenant :

   - des moyens de code de programmes lisibles par ordinateur pour afficher des locateurs de ressource aux clients,
   - des moyens de code de programmes lisibles par ordinateur pour recevoir du réseau une demande d'accès pour l'un des locateurs de ressource affichés partant d'un système d'ordinateur reliant le client au réseau ;
   - des moyens de code de programmes lisibles par ordinateur pour alimenter le réseau vers le système d'ordinateur d'un locateur de ressource,
     ledit locateur de ressource contenant une signature numérique représentative d'un droit accordé par le serveur locateur de ressource au client pour accéder à une ressource localisée par ledit locateur de ressource, ladite signature numérique étant calculée sur la base d'au moins une caractéristique unique du système d'ordinateur ou de la liaison du système d'ordinateur au réseau et basée sur un moyen d'identification de la ressource.

47. Un produit de programme d'ordinateur mis en oeuvre dans un support lisible par un ordinateur pour assurer l'accès d'un client à un contenu, dans un serveur fournisseur de contenu relié à un réseau, le produit de programme d'ordinateur comprenant :

   - des moyens de code de programmes lisibles par ordinateur pour recevoir du réseau une demande d'accès venant d'un système d'ordinateur reliant le client au réseau et contenant une signature numérique,
   - des moyens de code de programmes lisibles par ordinateur pour vérifier la signature numérique contenue dans un locateur de ressource selon au moins une caractéristique unique du système d'ordinateur de la liaison du système d'ordinateur au réseau reçue dans ladite demande, et en correspondance à un moyen d'identification du contenu demandé par le client, et
   - des moyens de code de programmes lisibles par ordinateur pour permettre au client d'accéder au contenu en correspondance au résultat de cette étape de vérification.

102

100 Client --- Network --- 104 Server

Figure 1

200 Client --- Network --- 202

204 Server A

206 Server B

Figure 2

300 Client

302 Network

304 Server A

306 CDN redirection unit

308 CDN Server 1

308 CDN Server 2

308 CDN Server n

Figure 3

```
        ┌─ 400                              ┌─ 500
   ╭─────────────╮                    ╭──────────────╮
   │   Client request │                 │  Client request  │
   │   received      │                 │ received (URL +  │
   ╰─────────────╯                    │   signature)    │
                                      ╰──────────────╯

   ┌─────────────┐ 402              ┌──────────────┐ 502
   │             │                  │              │
   │  extract URL │                  │  extract URL  │
   │             │                  │              │
   └─────────────┘                  └──────────────┘

   ┌─────────────┐ 404              ┌──────────────┐ 504
   │ extract IP address │           │ extract IP address │
   │ of client computer │           │ of client computer │
   └─────────────┘                  └──────────────┘

   ┌─────────────┐ 406              ┌──────────────┐ 506
   │  (optional)    │               │  (optional)     │
   │ extract other data │           │ extract other data │
   └─────────────┘                  └──────────────┘

   ┌─────────────┐ 408              ┌──────────────┐ 508
   │ calculate signature │          │ calculate signature │
   │ for extracted data │           │ S2 for extracted │
   │                 │              │      data       │
   └─────────────┘                  └──────────────┘

   ┌─────────────┐ 410              ┌──────────────┐ 510
   │ calculate new URL │            │ extract signature │
   │ with parameters  │             │   S1 from URL   │
   │ and the calculated │           │              │
   │    signature     │            └──────────────┘
   └─────────────┘
                                          512        ┌─ 514
   ╭─────────────╮ 412                    ◇           ╭──────────╮
   │ return calculated URL │        S1 = S2 ?  ─ No → │   Fail   │
   │   with signature │                    ◇           ╰──────────╯
   ╰─────────────╯
                                         Yes
                                          │
                                    ╭──────────────╮ 516
                                    │ Send back requested │
                                    │     content     │
                                    ╰──────────────╯
```

Figure 4                                    Figure 5